# EUROPEAN PATENT SPECIFICATION

(11) **EP 1 480 578 B1**
(45) Date of publication and mention of the grant of the patent: **04.05.2011**
(21) Application number: 03711280.2
(22) Date of filing: 27.02.2003
(51) Int. Cl.: A61C 17/22

(54) **TOOTHBRUSH KIT**
ZAHNBÜRSTENSATZ
KIT DENTAIRE

(30) Priority: 04.03.2002 US 90394
(43) Date of publication of application: 01.12.2004
(73) Proprietor: THE PROCTER & GAMBLE COMPANY, Cincinnati, OH 45202 (US)
(72) Inventor: WHITNEY, John, Roy, Hamilton, OH 45011 (US); BLAUSTEIN, Lawrence, Alexander, Moreland Hills, OH 44022 (US); BROWN, Patrick, William, Auburn, OH 44255 (US)
(74) Representative: Zetterer, Gerd
(86) International application number: PCT/US2003/005981
(87) International publication number: WO 2003/075786

(56) References cited:
- US-A- 6 015 328
- US-B1- 6 305 083

## Description

### Field of the Invention

The present invention relates to the field of toothbrushes and more particularly, the invention relates to kits for customizing and personalizing toothbrushes. The present invention also relates to methods for customizing toothbrushes and related methods for manufacturing and packaging such kits and furthermore, to specifically tailoring such kits for particular markets.

### Background of the Invention

Consumers sometimes prefer conformable toothbrushes because they may be personalized or customized to one's preferences. Some designs have been directed to toothbrush assemblies for small children and often contain interchangeable character handles. Examples of such assemblies are shown in U.S. Patents 6,015,328; 6,141,815; and 5,774,921.

Most user configurable toothbrush assemblies require significant disassembly or modification of the toothbrush itself. For example, the toothbrush assembly of the previously noted '328 patent contains a relatively complex assembly of a toothbrush head and neck, an adapter component, and a character handle. Given the degree of force and movement applied to the handle during brushing, a relatively complex engagement mechanism is used to secure the toothbrush head and neck assembly to the character handle. Again, although the toothbrush assembly of the '328 patent is satisfactory in many respects, there is a need for a toothbrush assembly that may be customized by an end user in a relatively simple manner.

Other toothbrush bases or holders are known in the art. For example, U.S. Patent 6,102,203 discloses a toothbrush cover and holding assembly. Although that assembly appears to be rather useful, it requires a relatively large space for its accommodation. Furthermore, most known toothbrush holders are designed for retaining multiple brushes and thus, have a relatively large footprint and occupy significant countertop space. As a result, it would be desirable to provide a toothbrush holder or base for a single toothbrush that was compact in size.

It is becoming increasingly important to market consumer products and particularly consumer healthcare products, to particular consumer groups. For instance, it is vastly preferred to tailor a product and its packaging for each region within which it is sold as opposed to try to distribute and sell the same product using the same packaging in the same fashion in all regions within which it is sold. However, configuring and packaging a product for each region within which it is sold generally increases the costs associated with packaging the product.

US 2,489,707 A describes a toothbrush with identification means. A toothbrush includes a frame formed of a transparent material, and providing a head portion and a handle portion. The head portion has secured therein a brush tufting. A receptacle is formed in the handle, opening through an end of the handle. The receptacle is rectangular in cross section and has flat parallel interior top and bottom wall surfaces. The rectangular cross section of the receptacle is uniform throughout the length of the receptacle. In addition, a sheet of cardboard is provided. This cardboard sheet is printed and divided by lines of weakness to provide a series of cards of equal length, width and thickness. The toothbrush and the sheet of cardboard is embodied in one package so that when the toothbrush is first used by a user, he will be reminded of the need for identifying the toothbrush and at the same time be possessed of the means of making an identification marker for the toothbrush personal to himself.

EP 0 683 995 A1 describes a toothbrush personalizing element, a toothbrush featuring such an element and a toothbrush package. A toothbrush having a handle and a brush fitted to the handle is personalized by means of a personalizing element, which comprises a body fitted to and at least partly surrounding the handle and is defined laterally by an outer surface presenting a distinguishing mark.

US 5,465,444 A describes an electric toothbrush. An electric toothbrush comprises a handle segment 1 and a slip-on brush. The handle segment has an electric motor, which can set a motor shaft, protruding from the handle segment, into a constant motion of rotation. A switch on the outside of the handle segment serve the purpose of switching the electric motor on and off. The slip-on brush has a gear that has a coupling, which, when slipping the slip-on brush on the handle segment couples with the motor shaft. The gear is designed in such a manner that it can generate a reciprocating motion of a tooth rack on the basis of the motion of rotation introduced by the motor shaft. This tooth rack can set the bristle carriers with bristle tuft rotating so as to alternate from left to right.

US 5,404,608 A describes an electric toothbrush. An electric toothbrush comprises a handle part and a push-on brush. From one end of the handle part there projects the end of a hollow shaft in which a toothbrush arbor is coaxially arranged, the push-on brush being adapted to be pushed on to the hollow shaft. The push-on brush has a rotatable tuft of bristles which may be driven by a longitudinally reciprocating connecting rod which attaches to the arbor when the brush and handle are attached together. A gear in the handle part has two cams which are mutually phase shifted by. The first cam displaces the hollow shaft and the second cam displaces the toothbrush arbor in the opposite direction.

### Summary of the Invention

The invention is as claimed in claim 1.

It is an object of the present invention to provide a toothbrush kit uniquely tailoring a product for a partial consumer group or geographic region that would not significantly increase the costs associated with packaging the product.

This object is solved by a toothbrush kit according to claim 1. Further advantages, refinements and embodiments of the invention are described in the respective sub-claims.

### Brief Description of the Drawings

The present invention may take physical form in certain parts and arrangements of parts, preferred embodiments of which will be described in detail in this specification and illustrated in the accompanying drawings which form a part hereof and wherein:
**Fig. 1** is a photographic front elevational view of a preferred embodiment toothbrush kit in accordance with the present invention;
**Fig. 2** is a photographic perspective view of a preferred embodiment toothbrush and end cap for use in the toothbrush kit of the present invention;
**Fig. 3** is a photographic front elevational view of the preferred embodiment toothbrush and end cap shown in **Fig. 2****;**
**Fig. 4** is a photographic side elevational view of the preferred embodiment toothbrush and end cap shown in **Fig. 2****;**
**Fig. 5** is a photographic side elevational view, of a side opposite that shown in **Fig. 4****,** of the toothbrush and end cap shown in **Fig. 2****;**
**Fig. 6** is a photographic rear elevational view of the preferred embodiment toothbrush and end cap shown in **Fig. 2****;**
Fig. 7 is a photographic bottom view of the preferred embodiment toothbrush and end cap shown in Fig. 2;
Fig. 8 is a photographic detail of an open end of the preferred embodiment toothbrush shown in Fig. 2 and a receiving cavity defined in the preferred embodiment end cap shown in Fig. 2;
Fig. 9 is a photographic perspective view of the preferred embodiment end cap shown in Fig. 2, showing a top region and an aperture;
Fig. 10 is a photographic top view of the preferred embodiment end cap shown in Fig. 2;
Fig. 11 is a photographic rear elevational view of the preferred embodiment end cap shown in Fig. 2;
Fig. 12 is a photographic top view of the preferred embodiment toothbrush and end cap shown in Fig. 2;
**Fig. 13** is a perspective illustration of another preferred embodiment toothbrush for use in the toothbrush kit of the present invention;
**Fig. 14** is a side elevational illustration of the preferred embodiment toothbrush depicted in **Fig. 13****;**
**Fig. 15** is a front elevational illustration of the preferred embodiment toothbrush depicted in **Fig. 13****;**
Fig. 16 is a perspective illustration of another embodiment toothbrush, not part of the claimed invention, for use in toothbrush kit of the present invention;
**Fig. 17** is a side elevational illustration of the embodiment toothbrush depicted in **Fig. 16****;**
**Fig. 18** is a front elevational illustration of the embodiment toothbrush depicted in **Fig. 16****;**
**Fig. 19** is a perspective illustration of another preferred embodiment end cap for use in the toothbrush kit of the present invention;
**Fig. 20** is a top view of the end cap illustrated in **Fig. 19****;**
**Fig. 21** is a perspective view showing the rear of the end cap illustrated in **Fig. 19****;**
**Fig. 22** is a bottom view of the end cap illustrated in **Fig. 19****;**
**Fig. 23** is a perspective illustration of a plurality of emblems on a planar backing sheet for use in the toothbrush kit of the present invention;
**Fig. 24****.** is a perspective illustration of a plurality of emblems on a rolled backing strip for use in the toothbrush kit of the present invention;
**Fig. 25** is a front elevational illustration of another preferred embodiment of the toothbrush kit of the present invention; and
**Fig. 26** is a side elevational illustration of the toothbrush kit depicted in **Fig. 25****.**

### Detailed Description of the Preferred Embodiments

The present invention provides a unique toothbrush kit that may be specifically configured to appeal to particular consumers or markets. The toothbrush kit enables a toothbrush contained in that kit to be selectively modified and personalized by an end user according to that user's specific preferences. The present invention also provides related methods for subsequent tailorization of a toothbrush contained in the kit. In addition, the present invention provides manufacturing and packaging techniques for producing a product specifically tailored to a particular region, market segment, or consumer group. These aspects are all described in greater detail herein.

In a first aspect, the present invention provides a toothbrush kit comprising a package, a toothbrush, one or more end caps, and one or more decorative emblems. As explained herein, the toothbrush kit may include (i) one end cap and one emblem, (ii) one end cap and a plurality of emblems, (iii) a plurality of end caps and one emblem, and (iv) a plurality of end caps and a plurality of emblems. The present invention encompasses all of these variations.

The toothbrush package is generally a relatively rigid packaging container for housing the toothbrush and other components of the kit. The package is adapted for retail display and so, preferably includes a transparent front cover that enables the contents of the package, i.e. the toothbrush, one or more end caps, and one or more emblems, to be viewed by consumers. Additionally, the package preferably includes a backing member having colorful markings, indicia, and/or designs printed thereon. It will be appreciated that the package is particularly adapted for display for retail sale.

A wide array of package types, construction, and designs may be utilized for the package of the preferred embodiment toothbrush kit of the present invention. Several particularly preferred packages are disclosed in U.S. Patents 6,189,693 and 6,311,837.
Generally, the package includes a relatively rigid backing member and a transparent front cover. Preferred materials for the backing member include, but are not limited to, paperboard, cardboard or other cellulose-based material. The clear or transparent front cover component is preferably formed from polyethylene terephthalate (PET) and related laminates thereof. Another preferred material for forming the transparent front cover of the preferred embodiment package is known in the industry as GAG, which is a copolymer film of PETG/APET/PETG. PETG is polyethylene terephthalate glycol and APET is amorphous polyethylene terephthalate glycol.

The toothbrush of the preferred embodiment kits may be nearly any type of toothbrush having the features characteristic of the kits described herein.
The toothbrush is an electric toothbrush. Specifically, the toothbrush may utilize any type of bristle pattern, be either of a replaceable head or non-replaceable head type and may utilize nearly any type of drive train an bristle arrangement.

A wide array of electric toothbrushes may be utilized in the preferred embodiment kits described herein. Examples of suitable electric toothbrush designs include, but are not limited to, those disclosed in U.S. Patents 6,000,083; 6,189,693; 6,178,579; 5,617,601;and 5,625,916.

Specific examples of preferred embodiment electric toothbrushes are described in greater detail herein. A wide array of plastics or polymeric materials may be used for the various components of the toothbrushes described herein. Generally, it is preferred to form the toothbrush body from a relatively strong, durable, and rigid plastic. Details as to the construction, materials, and assembly of such toothbrushes are set forth in the previously noted patents.

The end cap of the preferred embodiment toothbrush kit is a component that is adapted to engage an end of the toothbrush and to further support the toothbrush when placed in a vertical position, such as on a bathroom countertop. With the toothbrush used in the kit being an electric toothbrush, it is most preferred that the end cap is also adapted to serve as a battery cap. That is, in this version of the invention, an electric toothbrush is provided having an interior compartment defined within the body of the toothbrush for receiving one or more batteries. The compartment is accessible from an end of the toothbrush opposite the brush head end. Most preferably, the end cap is adapted to sealingly close the battery compartment and ideally, also include electrically conductive battery contacts for contacting exposed ends of one or more batteries disposed in the compartment of the toothbrush body.

The end cap is preferably generally hemispherical in shape, or at least partially or substantially so, and includes a flat planar bottom surface and an optional second flat planar rear surface. The flat planar bottom surface is provided so that the end cap may serve as a base and support a toothbrush engaged therewith in a generally vertical, upright position. The flat planar rear surface of the end cap is most preferably perpendicular to the bottom surface. The flat rear surface is provided so that the end cap may be positioned relatively close to a vertical wall or surface. This enables the end cap and toothbrush to be stored next to a bathroom wall or countertop back. However, it will be appreciated that the present invention toothbrush kits may also utilize end caps that do not contain this optional flat rear surface. The end cap also defines a receiving cavity that is adapted to receive and engage an end of a toothbrush as further explained herein. The receiving cavity is accessible from an aperture defined along a top surface or region of the end cap.

As previously noted, a feature of the present invention is that the end cap component of the toothbrush kit is relatively small in size and compact. Accordingly, when the toothbrush is in its stored vertically upright position, the overall size of the toothbrush and cap assembly is relatively small.

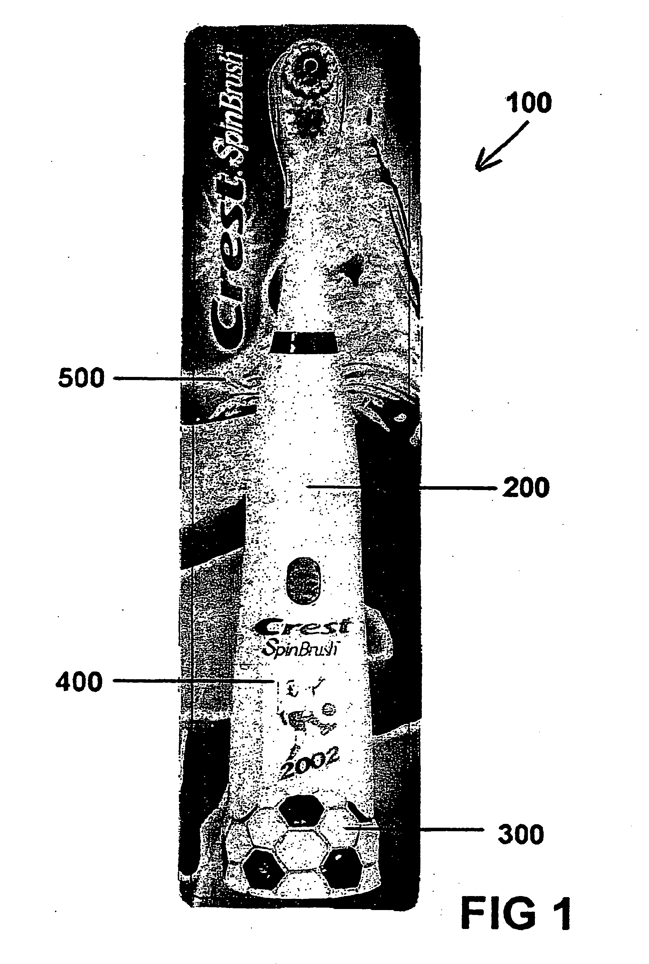

The terms "top," "bottom," "rear," "front," and "side" although relative in definition, are used herein to refer to the preferred embodiment toothbrush kit or components thereof, when oriented in an upright position as shown in **Fig.1. Fig. 1** is an elevational view of the front of a preferred embodiment toothbrush kit and shows the front of a preferred embodiment toothbrush and end cap. Accordingly, the meanings of the other terms will be understood.

It is contemplated that the preferred embodiment toothbrush kit will include a group or plurality of different styles of end caps. That is, each of the end caps is distinct from the other end caps in the group. It is envisioned that various sets of multiple end caps may be used and/or included in the toothbrush kits described herein. A set of end caps included in a kit contains a plurality of end caps, each of a different style. It is contemplated that any number of end caps could be included in the kit, however a preferred number is from about 2 to about 10. The incorporation of multiple end caps in a kit enables a consumer or end user to select a specific cap of the enclosed set for use with the toothbrush, as may be desired. Furthermore, the consumer may readily change which end cap is used with the toothbrush as frequently as he or she wishes.

Furthermore, in this toothbrush kit, it is most preferred that the end caps comprising a set, although each being distinct from the others, generally be associated or theme related to one another. However, as noted, differences may exist between each of the caps within a particular set. For example, a set of caps may be provided having a sports theme. In this example, each of the caps resembles a different type of playing ball such as a soccer ball, a football, a baseball, a basketball, a tennis ball, a golf ball, and a bowling ball, ...etc. Each of the end caps of a set is preferably shaped to resemble its intended playing ball, and most preferably contains decorative colorings and markings to further promote resemblance to the particular playing ball. For example, in the preferred embodiment set of caps having a sports theme, the caps resembling soccer balls, baseballs, basketballs, tennis balls, golf balls, and bowling balls are generally hemispherical in shape and contain colors, surface characteristics, and indicia representative of each of the respective balls. An end cap representing a football is shaped to resemble such and is colored brown and may further contain decorative stitching along its surface like that of a football. Furthermore, for sports theme end caps, it is preferred that the end caps be fashioned to resemble sports equipment rather than sports apparel. However, the present invention encompasses end caps resembling sports apparel or other ancillary sports related items.

The end caps are formed by conventional plastic molding procedures including for example injection molding, compression molding, and reaction injection molding. It is preferred that for each of the individual end caps, details associated with a particular cap are molded or otherwise formed directly into the surface of the cap. For example, surface characteristics of certain game balls may be molded or otherwise formed into the outer surface of the end cap. Examples of surface characteristics include stitching for footballs and baseballs and dimples for golf balls. Conventional printing and painting methods are utilized for providing decorative colorings and/or markings on the end cap. Printing and painting methods are described in greater detail herein.

The preferred embodiment toothbrush kit also comprises one or more emblems or labels that may be adhesively attached to the toothbrush and optionally, to one or more end caps. The terms "emblem" and "label" are used interchangeably herein. If a plurality or group of emblems or labels are provided as a set, it is generally preferred that the number of labels ranges from about 2 to about 10. In another embodiment, the toothbrush kit contains between 2 and 4 emblems or labels. However, the preferred embodiment label sets also include 1 or more than 10 labels. The emblems preferably contain decorative markings and indicia. If a group or plurality of labels are provided, it is preferred that each of the labels be distinct from other labels in the group. Preferably, the group or plurality of labels are related to one another even though each is distinct. This is explained in greater detail herein. Most preferably, the labels are also theme related to the one or more end caps included in the kit. For example, for a sports theme toothbrush kit, a plurality of sports emblems are provided. That is, the set of emblems in this preferred embodiment kit contain various sports related indicia, markings, logos, and/or designs. This feature of the preferred embodiment kits is described in greater detail herein.

The emblems are preferably in the form of preprinted labels that are releasably secured to a removable backing layer. The labels may be secured to a planar backing layer or backing layer in the form of a rolled sheet or a strip. Other configurations for the labels are contemplated. Preferably, the emblems or labels are formed from a material that is resistant to water and dentifrice slurry. An example of such a material is Mylarϑ, polyethylene, or any polymeric or wax coated substrate that imparts water repelling properties to the resulting emblem. Additional examples of polymeric materials that may be suitable for use as the label include, but are not limited to, polyethylene terephthalate (PET), and polyvinyl chloride (PVC). If PET is used, it is most preferred to use a transparent PET so that when applied to the body of a toothbrush, the label will not be readily apparent, only the printing, indicia, or markings on the label will be readily apparent. It is also contemplated to use coated paper for the label. A preferred label construction is a transparent PET film with various markings or indicia printed on it, and having a coating of transparent polyethylene to prevent or minimize degradation of the printed material or ink.

Regarding the adhesive for the label, nearly any type of adhesive is suitable so long as it is resistant to water and dentifrice slurry. A preferred adhesive is a pressure sensitive acrylic based adhesive. Other examples of adhesives that may be suitable for use in affixing the labels described herein to the toothbrush and/or end cap include the adhesives described in U.S. Patents 5,382,762; 4,074,014; and 6,312,799.

As noted, various markings, indicia, text, or designs may be printed upon one or more of the components of the present invention toothbrush kits. A wide array of printing techniques may be employed including, but not limited to, tempo printing, screen printing, transfer printing, ink jet printing, and laser techniques. These printing methods may be used to apply or form text, numbers, logos and/or designs upon any of the components described herein. An informative description of printing techniques and materials is provided in WO 00/56,609 and WO 99/08,935.

The present invention also provides methods of customizing or tailoring a toothbrush according to a user's preferences. In a preferred technique according to the present invention, a toothbrush kit is provided that comprises a package, a toothbrush, one or more end caps as described herein, and one or more emblems as described herein. Upon obtaining the toothbrush kit and removing the contents from the package, the user selects (i) an end cap for use with the toothbrush (for embodiments in which more than one end cap is provided), and (ii) an emblem for placement on the toothbrush (for embodiments in which more than one emblem is provided). For embodiments in which multiple end caps and emblems are provided, preferably, the end cap and the emblem are selected together such that they match or pertain to a common theme, such as a sport or sports team. The user then affixes the emblem to the toothbrush. Preferably, the emblem is adhesively secured to the toothbrush. As described herein, the emblem is preferably secured to the toothbrush within a designated region. The method also includes a step of engaging the end of the toothbrush with the selected end cap. Preferably, the end of the toothbrush opposite the end at which the head is located, is positioned into a receiving cavity defined in the end cap. Upon engagement between the end cap and the toothbrush, the resulting assembly may be positioned upright and stored on a flat surface.

The preferred embodiment toothbrush kit may be particularly tailored depending upon the user's preferences. Depending upon the quantity of emblems and end caps provided in a kit, an extensive number of different combinations of colors, indicia, and markings may be associated with each toothbrush and end cap in a kit.

Referring now to the drawings wherein the various photographs and illustrations are for the purposes of describing the preferred embodiments of the invention only and not for purposes of limiting same, **Fig. 1** shows a preferred embodiment toothbrush kit 100 according to the present invention. The preferred embodiment kit **100** comprises a toothbrush **200,** one or more end caps **300,** one or more emblems or labels **400,** and a package **500.** It will be appreciated that although the preferred embodiment kit **100** shown in **Fig. 1** contains an emblem already adhered to the toothbrush, it is also preferred that the kit contain one or more emblems that have not yet been applied to the toothbrush. When such emblems or labels are supplied in that form, they are referred to herein as being supplied "loose." Each of these components of the preferred kit and their arrangement with each other is described in greater detail below.

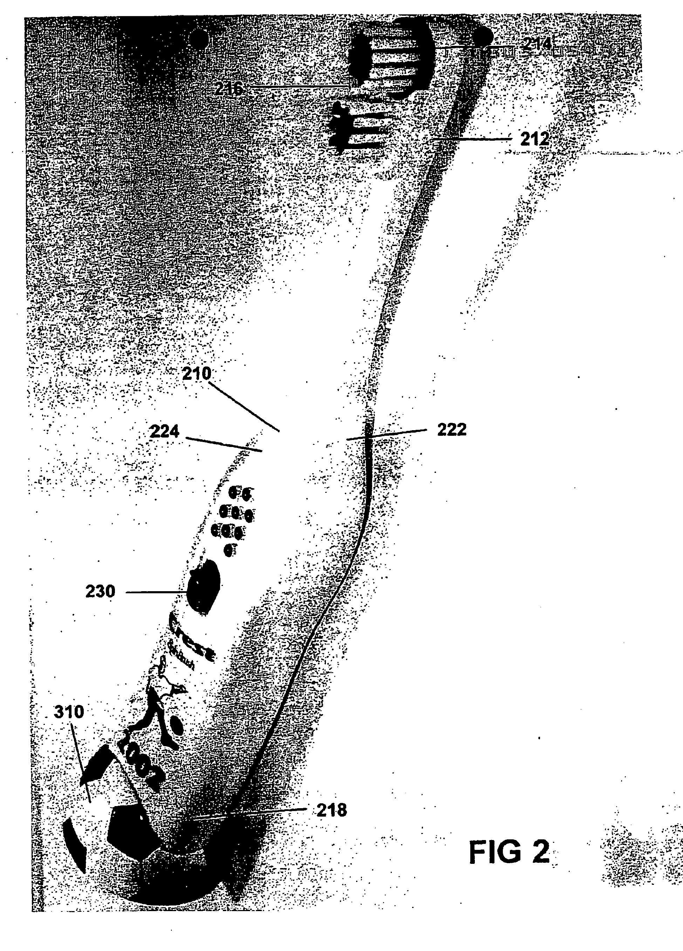

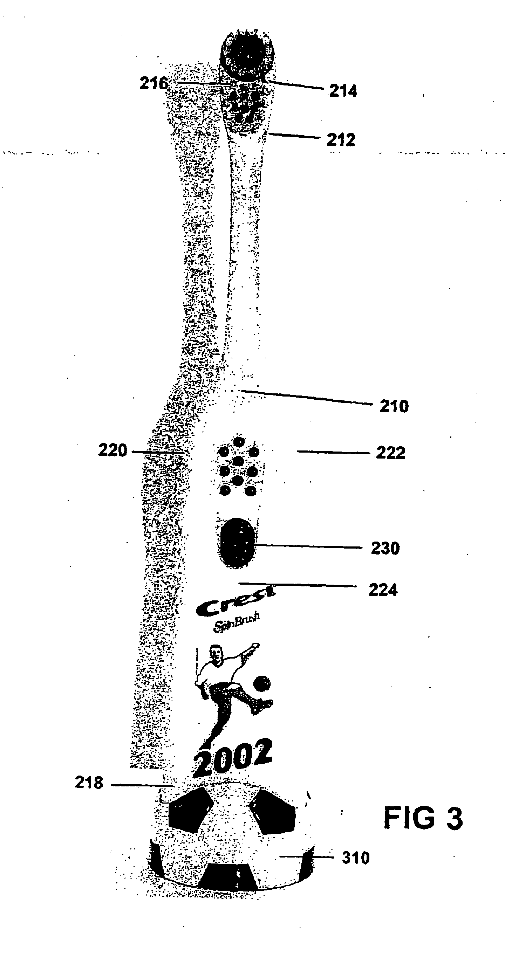

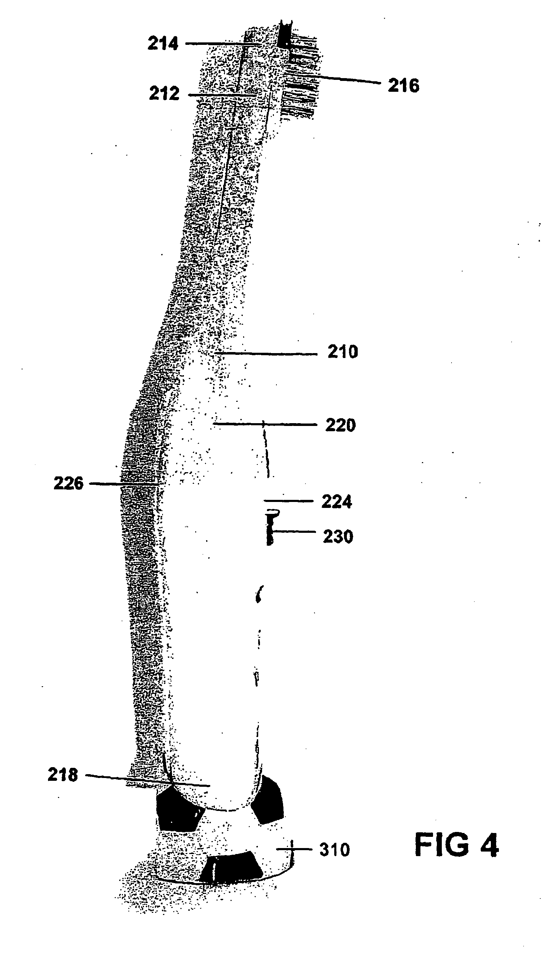

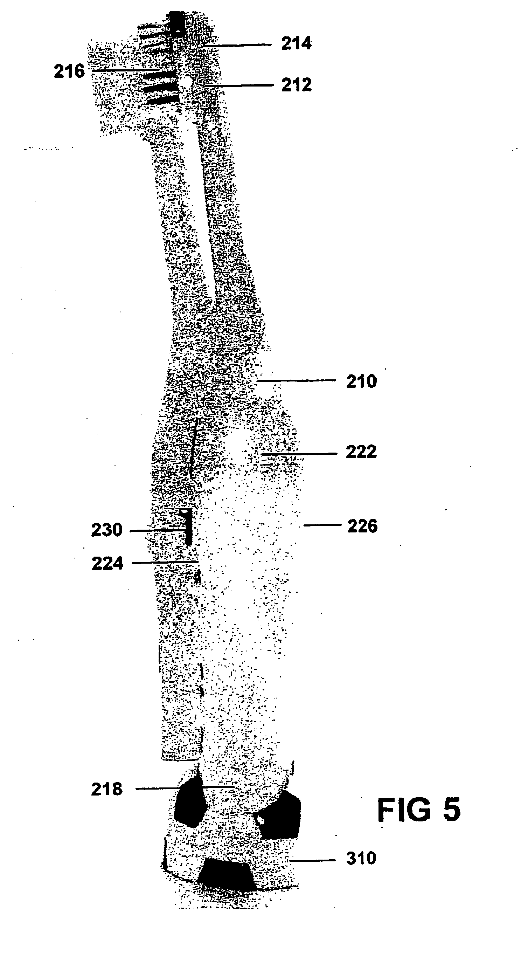

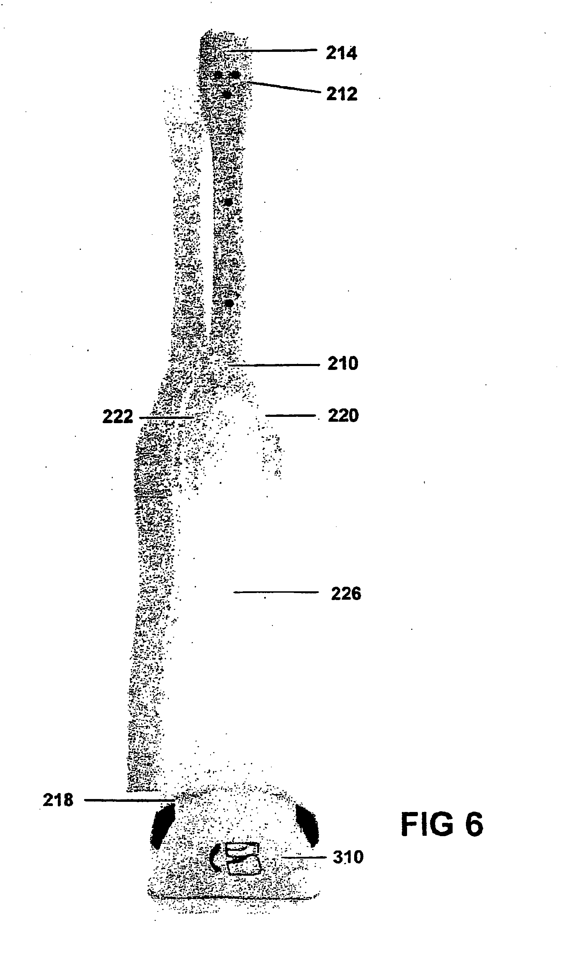

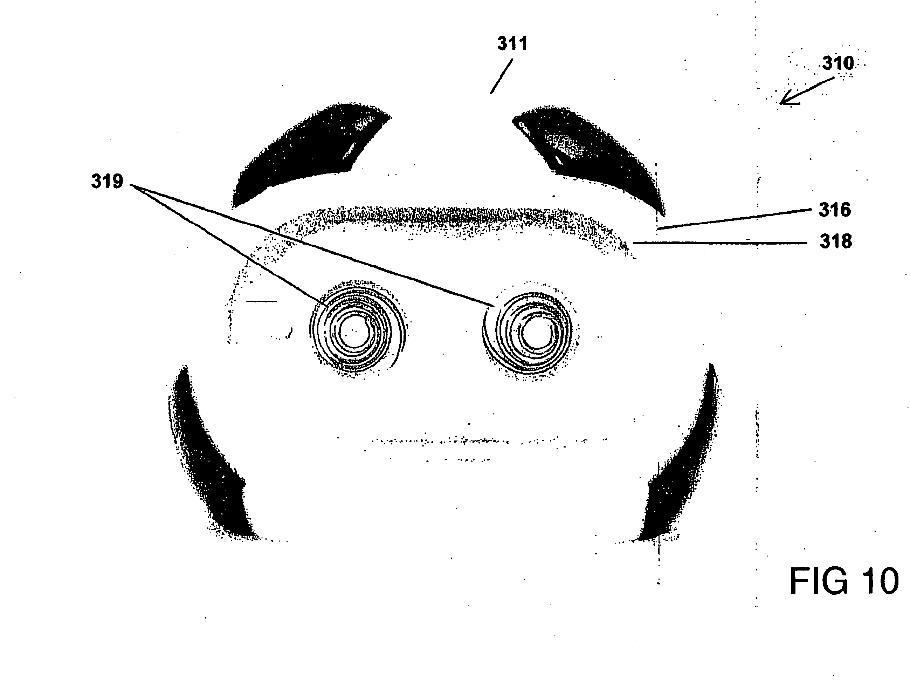

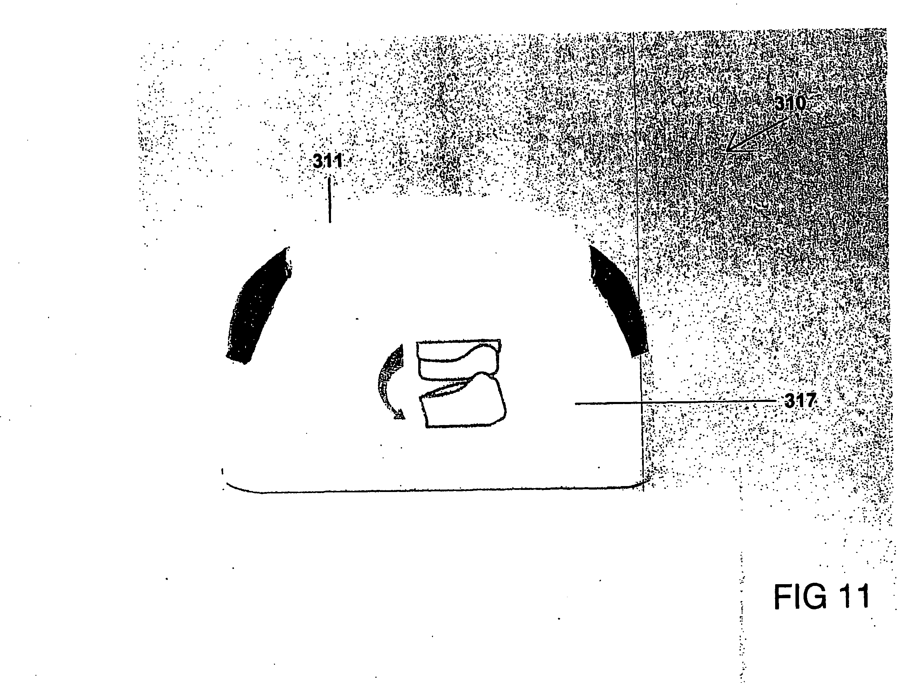

**Figs. 2 -12** are various views of a preferred embodiment electric toothbrush **210** and a preferred embodiment end cap **310** for use in the toothbrush kit of the present invention. Preferably, the toothbrush **210** and the end cap **310** are used In the kit **100** shown in **Fig. 1****.** It will be appreciated that, although minor differences exist, the toothbrush **210** is substantially the same as the toothbrush **200** shown in **Fig. 1****.**

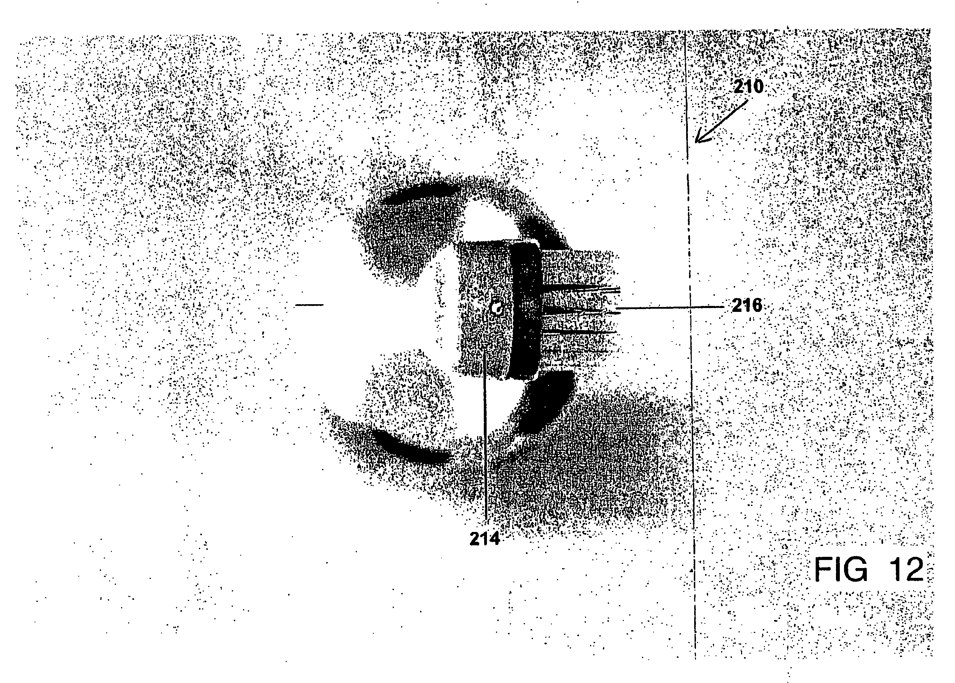

Referring to **Figs. 2-6****,** the preferred embodiment toothbrush **210** includes a first end **212** at which is disposed a brush head **214** having a plurality of bristles **216,** and a second end **218** opposite from the first end **212.** The toothbrush **210** also includes sloping sides **220** and **222** that extend between a front surface **224** and a rear surface **226.** The toothbrush **210** further includes a switch **230** for activating the drive train (not shown) enclosed within the toothbrush that operates at least a portion of the bristles **216.** **Fig.12** illustrates the top of the toothbrush **210** and brush head **214.**

It is preferred that the lower region of the front surface of the toothbrush body be relatively smooth and adapted for adhering an emblem or label thereto. In **Figs. 2-6****,** an emblem is already adhered to the toothbrush between the switch **230** and the end cap **310.** It is also envisioned that one or more emblems or labels could be adhered to the side(s) or other regions of the toothbrush.

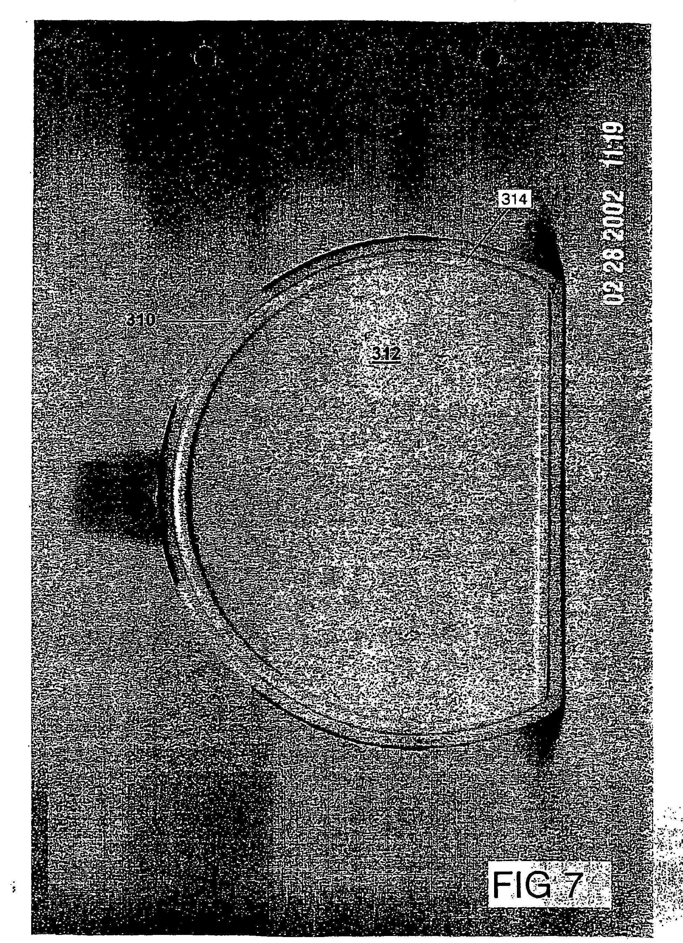

**Fig. 7** is a detailed view of a bottom surface **312** of the end cap **310** shown in **Figs 2-6****.** Preferably, the end cap **310** provides a raised footing **314** extending around the perimeter of the bottom surface **312.** The raised footing **314** promotes stability of the end cap, particularly when a toothbrush is engaged therewith and placed in an upright vertical position.

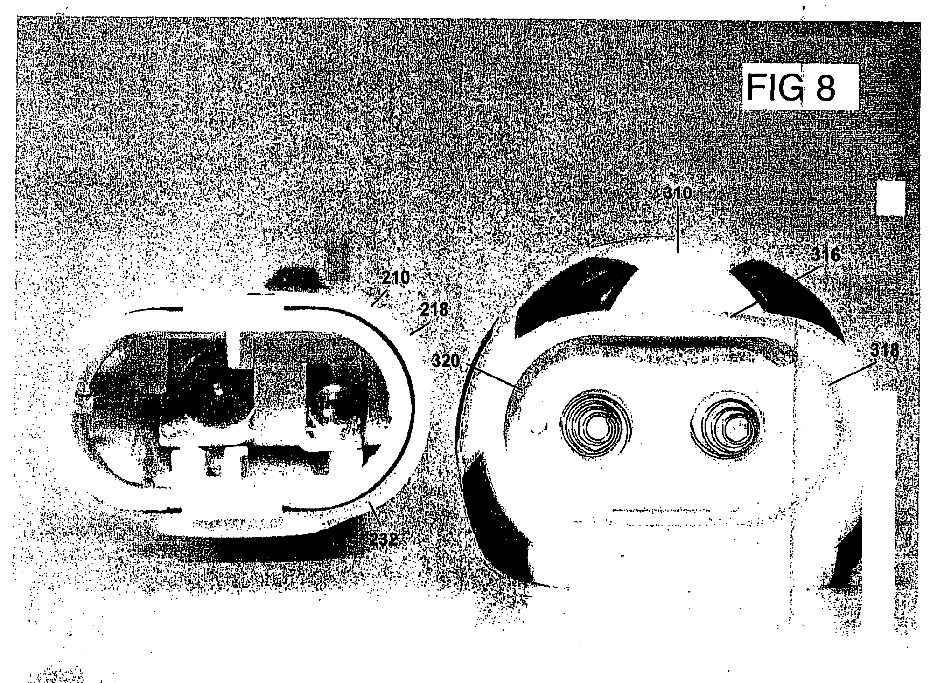

**Fig. 8** is a detailed view of an end of the toothbrush **210** and the top region of the end cap **310** shown in **Figs. 2-6****.** Specifically, the end **218** of the toothbrush **210** is shown as open and providing access into the interior of the toothbrush. This interior is adapted to retain batteries (not shown) used for powering the drivetrain and rotating bristles of the toothbrush **210.** Disposed at the end **218** is an engagement member **232** that assists in securing the end cap **310** to the end **218** of the toothbrush **210.** The end cap **310** defines an aperture **316** generally along a top region of the end cap. The end cap **310** further defines a receiving chamber **320** defined by an interior wall **318** extending within the interior of the end cap.

Upon engagement between the end **218** of the toothbrush **210** and the end cap **310,** the member **232** extending from the end of the toothbrush **210** partially extends into the receiving chamber **320** of the end cap **310.** Preferably, at least a portion of the member **232** contacts a portion of the interior wall **318** to further engage and secure the toothbrush **210** with the end cap **310.**

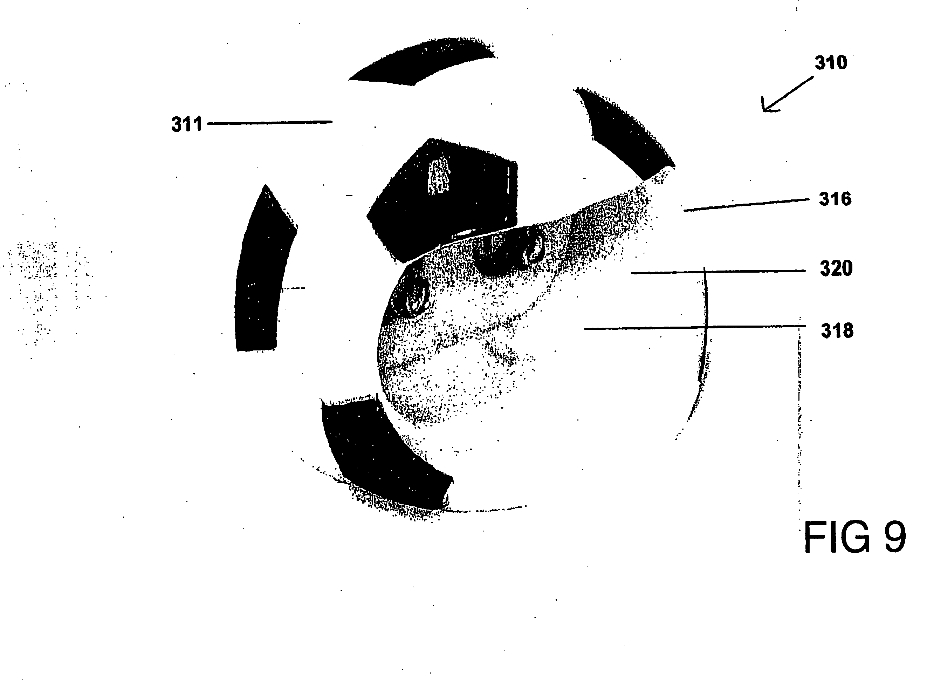

**Figs. 9-12** show various additional aspects of the preferred embodiment end cap **310** shown in **Figs 2-6****.** **Figs. 9-12** show the end cap **310** separate from the toothbrush **210** shown in **Figs. 2-6****.** Referring to **Figs. 9-12****,** the end cap **310** is generally hemispherical in shape, or at least partially so, and includes an arcuate surface **311** extending between a flat planar bottom surface **312** (Fig. 7) and a flat planar rear surface **317.** Preferably, the bottom surface **312** is perpendicular to the rear surface **317.** A footing member 314 (Fig. 7) is disposed along the bottom surface **317.** Defined along a top region of the end cap **310** is an aperture **316** that provides access to an interior cavity or receiving chamber **320.** Specifically, the receiving chamber **320** is defined by an interior wall **318.** Preferably disposed at the bottom or lower region of the chamber **320** are battery contacts **319.**

The end cap 300 could further include an outer arcuate surface that is generally
hemispherical or at least substantially so, extending about the sides, front, and a portion of the top of the end cap **300.** The end cap could also include a planar bottom surface (not shown) and a planar rear surface. The end cap **300** defines an aperture along its upwardly facing top region that provides access to a receiving chamber (not shown) defined within the interior of the end cap **300.** As described herein, the receiving chamber facilitates engagement with a toothbrush.

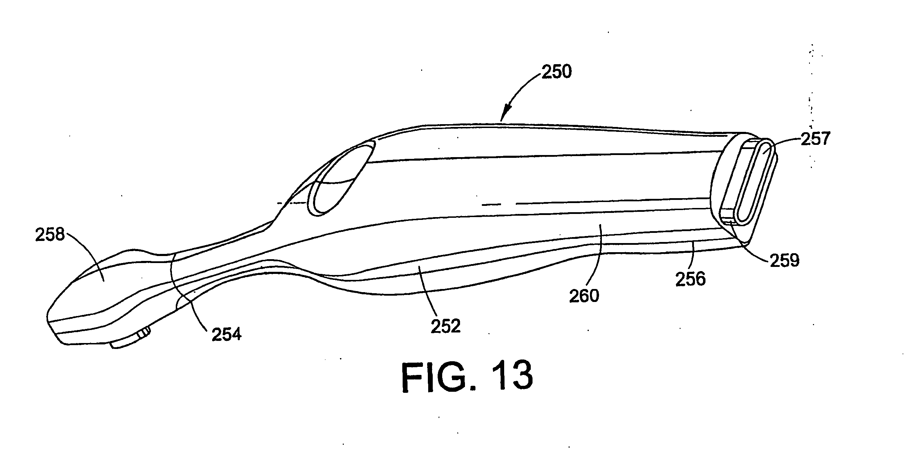

**Figs.13-15** illustrate another preferred embodiment toothbrush **250** for use in the present invention toothbrush kit. As shown in **Fig 13****,** the toothbrush **250** includes an elongated body portion **252,** which has a first end **254** and a second end **256.** A brush head **258 is** attached to or otherwise formed along the first end **254** and a handle **260** is attached to or otherwise formed along the second end **256.** The toothbrush **250** also includes a switch **253** for activating the drivetrain (not shown) and operating the moving bristles.

The head **258** has a traditional relatively large brush head shape which permits the user to brush his or her teeth in the typical manner of an up and down fashion. The design of the brush head **258** allows for inexpensive manufacture and assists in bringing effective motorized rotational toothbrushes within the financial reach of a large portion of the population.

Defined along the second end **256** of the toothbrush **250** is an aperture **257** that provides access to an interior battery compartment (not shown) defined within the body **252.** The aperture **257** is defined by an outwardly extending member **259** that is adapted to engage an end cap as described herein.

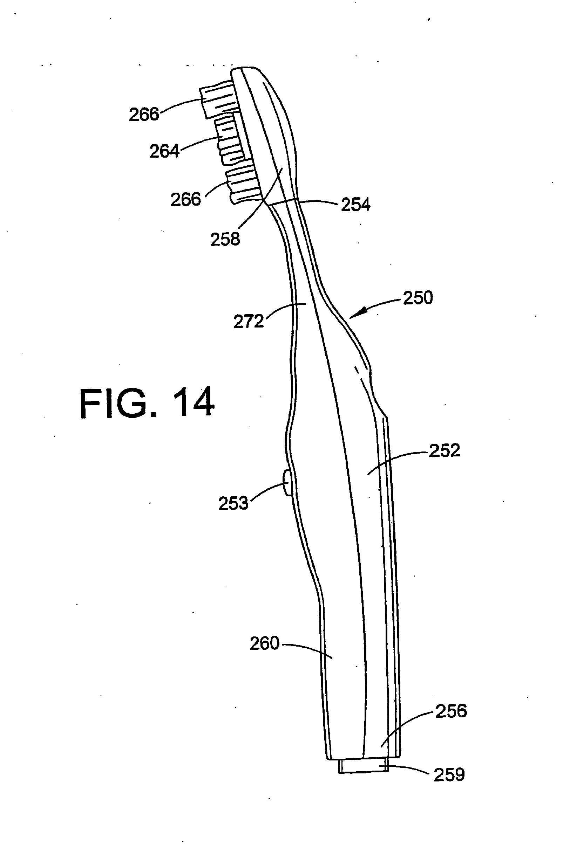

Referring now to **Figs. 14-15****,** the head **258** further includes a longitudinal axis **262,** a circular or moving portion **264** of brush head **258** and a static portion **266** of brush head **258.** The static portion **266** is located on opposite sides of the circular portion **264.** The circular portion **264** is located at the center of the brush head **258.** The circular portion **264** rotates, swivels, oscillates or reciprocates about an axis approximately normal to the longitudinal axis **262** of the brush head **258.** The circular portion **264** may rotate 360° or partially rotate or oscillate or reciprocate in a back and forth manner.

The circular portion **264** includes stiff bristles **268.** The static portion **266** includes soft bristles **270.** The stiff bristles **268** are slightly recessed with respect to the soft bristles **270.** The stiff bristles **268** aid in the deep cleaning and plaque removal process, while the stationary soft bristles **270** are softer so as to not damage the gums.

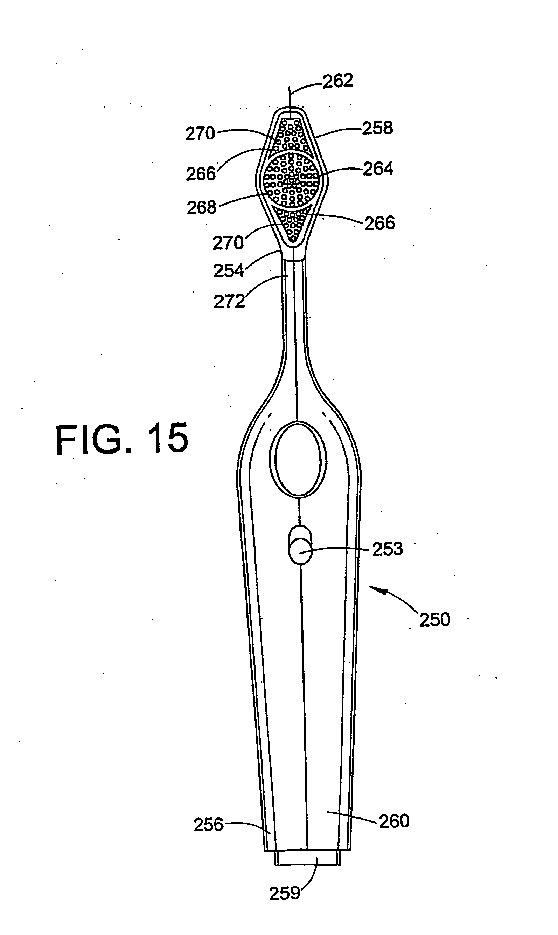

Referring again to **Figs. 14** and **15****,** the elongated body portion **252** further includes an angled shaft **272,** located between the head **258** and the handle **260.** The angled shaft **272** provides an ergonomic benefit. The angle is well known for its ergonomic benefit in permitting easier access into the back recesses of the mouth while still contacting the tooth surface.

**Fig. 15** also illustrates a region along the outer surface of the toothbrush **250** that is well suited for subsequent application of one or more emblems or labels. This region is generally defined between the switch **253** and the end **256.** As previously noted, the emblems may be applied to other regions of the toothbrush **250** such as along the sides of the toothbrush.

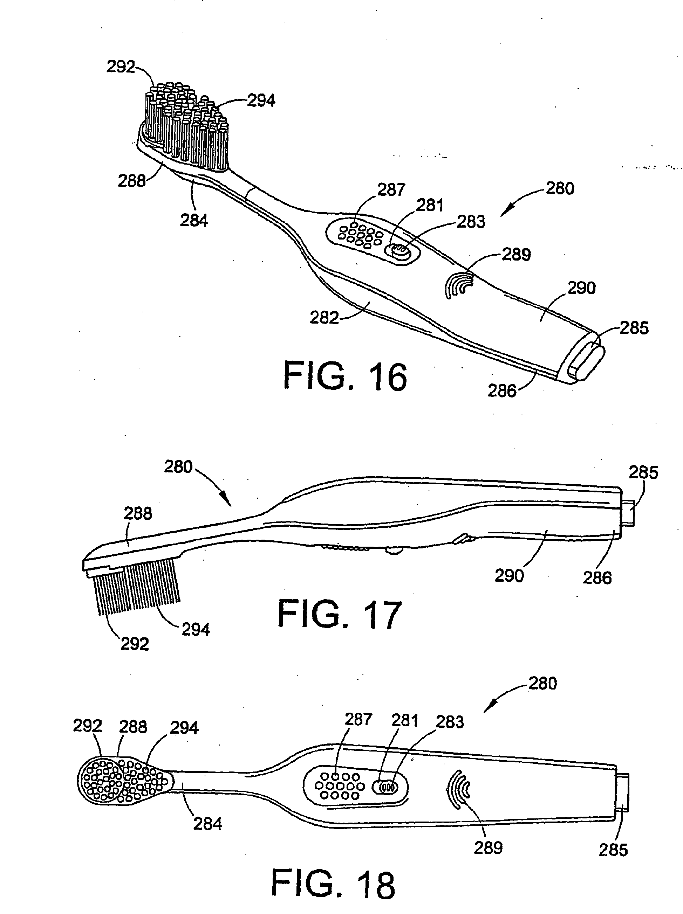

Another preferred embodiment electric toothbrush **280** for use in the kit of the present invention is shown in **Figs. 16-18****.** The toothbrush **280** includes an elongated body portion **282** which has a first end **284** and a second end **286.** A head **288** is attached to or otherwise formed along the first end **284** and a handle **290** is attached to or otherwise formed along the second end **286.** The body **282** also provides an outwardly extending member **285** that provides access to a battery compartment defined within the body **282.** As explained herein, the member **285** is adapted to engage an end cap (not shown).

The head **288** further includes a circular or moving portion **292** of brush head **288,** and a static portion **294** of brush head **288.** However, it is to be appreciated that the circular portion **292** and the static portion **294** can be arranged in different configurations. The circular portion **292** rotates, swivels, oscillates or reciprocates about an axis approximately normal to the longitudinal axis of the brush head **288.**

Referring again to **Figs. 16-18****,** a switch **281** is provided to control operation of the electric toothbrush **280.** The switch **281** includes a molded actuator button **283.** The switch **281** is manually depressed by pressing the actuator button **283** down, which then completes an electrical circuit and provides momentary operation of the toothbrush. The switch **281** also allows continuous operation through a ramp design, sliding the button **283** forward toward the head **288** to provide for continuous operation. The toothbrush then continuously operates until the button **283** is slid back into an off position toward the handle **290.**

The embodiment toothbrush **280** also utilizes a battery (not shown). To install the battery into the interior of the toothbrush **280,** the battery is inserted into an open end defined by the member **285** and an end cap as described herein is engaged over the open end.

If desired, raised grip areas **287** can be molded into or otherwise formed or applied to the housing as shown in **Fig. 16** and **Fig. 18****.** The raised portions **287** are used to support a user's thumb and forefinger or other fingers to facilitate use of the electric toothbrush. Raised portion **289** may also be molded into the toothbrush housing to aid in gripping.

All of the preferred embodiment electric toothbrushes **200, 202, 210, 250,** and **280** can also be packaged in a package in which the consumer can depress the button through the packaging and see its operation while still inside the packaging, and then be able to operate it continuously once out of the packaging.

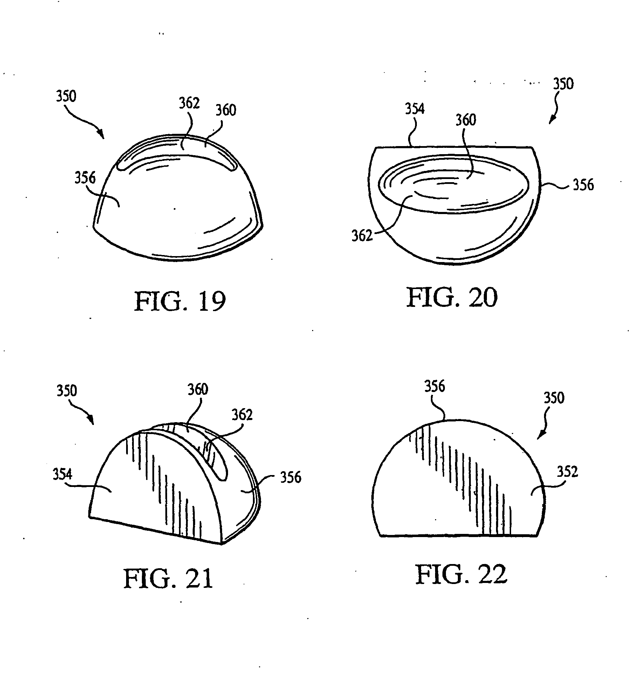

**Figs 19-22** illustrate another preferred end cap **350** for use with the present invention toothbrush kit. The end cap **350** includes a planar bottom surface **352,** a planar rear surface **354,** and a generally arcuate surface **356** extending between the bottom and rear surfaces **352** and **354.** The end cap **350** defines an aperture **360** generally along a top region of the cap, opposite from the bottom surface **352.** The aperture **360** provides access to a receiving chamber **362** defined within the interior of the end cap. As explained herein, the receiving chamber is adapted, i.e. sized and shaped, to engage and receive an end of a toothbrush, and particularly to engage and receive an engagement member extending from an end of a toothbrush such as members **232** shown in **Fig. 12****,** member **259** shown in **Figs. 13-15****,** and member **285** shown in **Figs. 16-18****.** In the event the end cap **350** is used as a battery cap for an electric toothbrush, it is most preferred that the end cap **350** contains one or more battery contacts (not shown) disposed in the receiving chamber **362.**

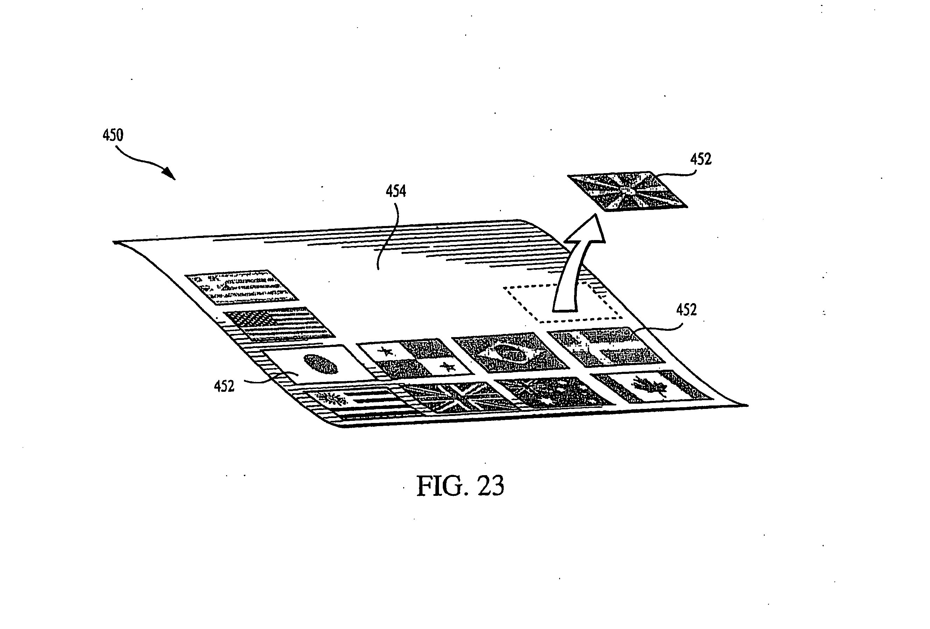

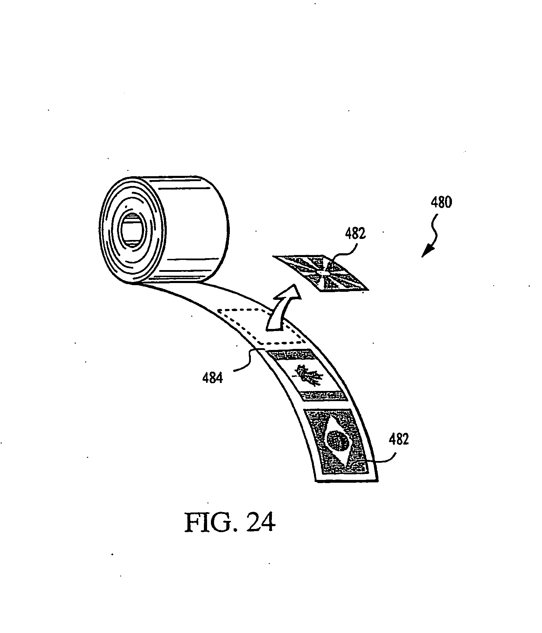

**Figs. 23** and **24** illustrate additional preferred embodiments of emblems, and particularly a plurality of emblems or a set of emblems, for use in the present invention toothbrush kit. Specifically, **Fig. 23** illustrates a preferred embodiment set **450** of emblems. The set **450** includes a plurality of emblems or labels **452,** each releasably retained on a backing sheet **454.** An adhesive is applied to the rear or contacting face of the labels **452** to aid in their retention on the backing sheet **454** and for their subsequent application to a toothbrush or end cap. As will be appreciated, each of the labels **452** disposed on the sheet **454** contains different markings, indicia, or coloring. As previously explained, an end user may select one or more labels **452** and place those labels on the outer surface of a toothbrush and/or end cap(s) provided in a toothbrush kit. **Fig. 24** illustrates another preferred embodiment set **480** of emblems. In this embodiment, a plurality of emblems or labels **482** are provided on a rolled backing strip **484.** It will be appreciated that although Figs. 23 and 24 illustrate labels with various country flags exhibited thereon, the preferred embodiment labels may contain nearly any marking, indicia, design or text. Other emblems or labels can be used which share a common characteristic or theme with the end cap. For instance, the emblems or label might contain a sports figure, such as a soccer player, that coordinates with an end cap provided in the form of sports equipment, such as a soccer ball.

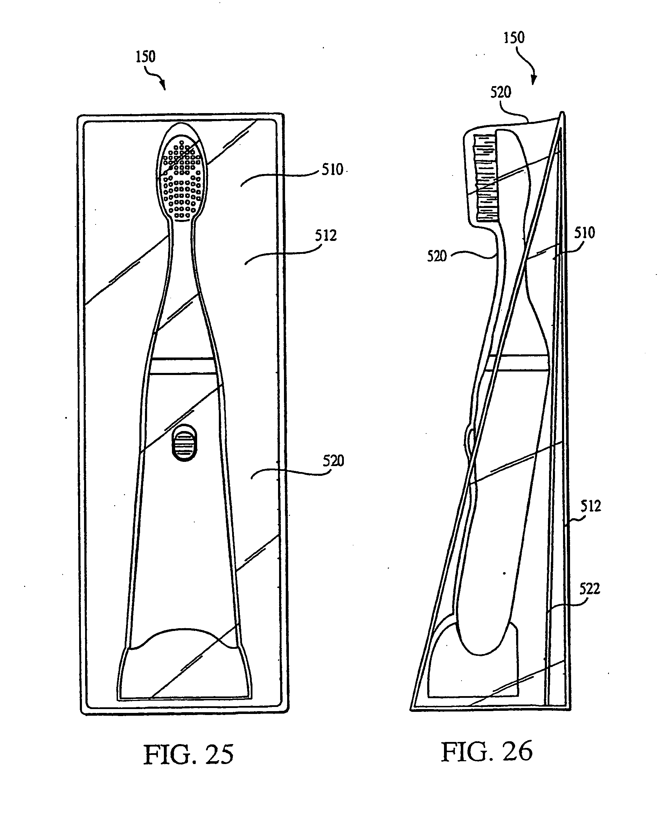

**Figs. 25** and **26** illustrate another preferred embodiment toothbrush kit **150** comprising a package **510,** a toothbrush, an end cap, and a label. Since details of the preferred toothbrush, end, cap, and label have been previously discussed herein, these components and their incorporation in the kit **150** are not specifically addressed here. Instead, details of a preferred package **510** are described as follows. The package **510** includes a relatively rigid backing member **512** and a contoured member **520** that is preferably transparent which engages the backing member **512** to sealingly enclose the interior and contents of the package **510.** As will be understood by reference to **Figs. 25** and **26****,** the contoured member **520** is sized and shaped to efficiently enclose the contents of the package **510.** Accordingly, when engaged with the backing member **512,** the contoured member **520** closely follows the outer surface of the toothbrush and end cap as those components are stored within the package. The contoured member **520** may optionally include one or more strengthening ribs **522.** The one or more emblems or labels, if supplied loose within the package **510** of the kit **150,** are preferably placed alongside the backing member **512** so that they are viewable from the exterior of the package.

As previously noted, other aspects include manufacturing and packaging techniques for producing a product, *i.e*. the toothbrush kit, that is specifically tailored to a particular region, market segment, or consumer group. As explained below, this is accomplished by producing certain components of the toothbrush kit to have one or more common themes or characteristics. And further, by organizing or matching these theme-based components with one another, a toothbrush kit is produced that has particular features to appeal to a desired region, market segment, or consumer group. Furthermore, manufacturing and/or packaging costs associated in producing these highly market specific and uniquely tailored toothbrush kits are less than what would be expected since some degree of tailorization or customization is left for the end user to perform, if desired.

In a most preferred embodiment, the emblems if provided in a set or group, are related to or associated with one another by a theme or common characteristic. An example of an associative characteristic is language. For instance, labels having different country flags representing countries in which English is a language, or even a primary or first language, could be grouped together and included in a toothbrush kit. More preferably, such a set of labels would be incorporated in a toothbrush kit containing instructions or text in English also. Thus, a label set would be provided containing labels having flags of the United Kingdom, United States, Canada...etc. printed thereon. Continuing with this example, labels having country flags representing countries in which German is a language, or even a primary or first language, could be grouped together and included in a toothbrush kit in which any accompanying instructions or text is in German also. Therefore, a label set would be provided containing labels of the flags of Germany, Austria...etc.

As previously noted, it is also contemplated to include single labels within a package as part of the present invention toothbrush kit. For language-based packaging themes, as described above, a single label containing the flag of Italy could be provided for a package containing text or instructions in Italian. Similarly, a single label containing the flag of France could be provided for a package containing text or instructions in French. Of course, if desired, a set of multiple labels could be included in which other labels would contain flags of other French speaking countries or jurisdictions.

Instead of providing toothbrush kits or label sets having a language-based theme, such kits could be geography-based. In this version of the invention, a plurality of labels are provided that contain related or associated indicia or markings indicative of geographical regions. For instance, the labels could contain flags of certain countries of particular regions. For example, a set of labels could be provided that contain flags of countries within a particular region. For instance a set of labels for Europe could be provided on a common backing sheet, the labels containing the flags of the U.K., Germany, France, Italy...etc. Another example of a set of labels having a geographical theme, would be that for North America in which a set of labels would be provided containing the flags of Canada, United States, and Mexico. Furthermore, a set of labels containing the flags of the states of the United States is contemplated. Other possible geographic regions include Latin America, Central America, the Middle East, ... etc. Another geographic based theme could be countries that share a common border.

Instead of providing toothbrush kits or label sets having a language-based theme, or a geography-based theme, the associative characteristic for a set of labels could be based upon a business's distribution network or area. For example, if a business distributed the present invention toothbrush kits in two different regions, a first label set containing flags of countries in one region could be used for toothbrush kits intended to be sold and/or distributed in that region, and a second label set containing flags of countries in the other region could be used for toothbrush kits intended for sale or distribution in that other region. Thus, the theme might be a common distribution center or warehouse that services a particular region or set of countries.

This feature in which multiple emblems or labels are related to one another is also preferably further related with the type of end cap(s) that is provided in the toothbrush kit. For instance, if the end cap is suggestive of a particular type of sport, the accompanying set of emblems or labels could include logos, designs or text indicative of various teams associated with that sport. An example of this configuration is if the end cap represented a soccer ball, the associated emblems would relate to various soccer teams. Another example is if the end cap represented a football, the associated emblems would relate to various football teams.

This feature of matching a set of labels to one or more end caps of a particular toothbrush kit may further be extended to also relate to the markings, designs, logos and/or language of text used in printing the package of the kit. An example of this feature would be (i) the identification of an intended region in which the toothbrush kit will be distributed and sold, (ii) the identification of a common language, or even the primary language of that region, and (iii) the identification of a marketing factor such as a popular sport within that region. In this scenario, an example would be a toothbrush kit provided for distribution and sale in the United States, containing text in English, relating to American-style football. Alternatively, the toothbrush kit could be configured for distribution and sale in Germany and Austria and so, would contain text in German, and might further relate to soccer.

A method for packaging and tailoring a toothbrush kit for a particular market is as follows. Identification analyses are performed to determine the region in which the kit will be sold, and one or more marketing characteristics or theme(s) associated with that region. Inventories or sources for the components of the kit are provided. Next, at least one of the end cap components and emblem sets are selected based upon the marketing characteristic(s) of that region. The selected components and all remaining components of the kit are then packaged in a suitable packaging container as described herein, preferably containing text a common language, or even the primary language, of that region. The marketing characteristics may for example include one or more popular sports of that region, the common or primary language of that region, the geographical proximity of countries or states within that region, or a business's distribution network within that region. Other common themes or factors associated with or common within the region can be utilized. These can be utilized alone or in combination. And, the identification analyses may be performed in any order.

A preferred manufacturing and packaging process for producing a toothbrush kit that is specifically tailored for a certain market is as follows. An inventory or source of toothbrushes is provided. Also, an inventory or source of either a single type or multiple types of end caps is provided. The type or types of end caps that are provided depends upon the identification analyses, e.g. the determination of a characteristic or marketing factor of the planned sales region. From these sources, a toothbrush and one or more end caps are matched with a suitable package or component thereof such as a transparent front cover. The language of any text or indicia that is either preprinted or that may be subsequently printed on the package depends upon the identification analyses, e.g. the determination of the primary language of the planned sales region. The resulting package assembly is directed to one or more packing stations at which one or more emblems are placed into the package. The type or types of labels, or rather the nature of the theme or common characteristic of the labels, depends upon the identification analyses, e.g. the determination of a characteristic or marketing factor of the planned sales region. In addition, consideration is also given to the theme or characteristic(s) of the one or more end caps provided in the kit, and the language of text that may be provided on the package. Depending upon the type of theme or characteristic to be followed for the toothbrush kit, either a single label or a set of a plurality of labels is placed in the package assembly. It is contemplated that in some versions of the toothbrush kit, it may be desired to include a plurality of labels, each on a separate backing layer. After deposit of one or more labels within the package assembly, the remaining backing member of the package, i.e. the cardboard member, is then applied and engaged with the transparent front cover and the package is sealed.

In manufacturing or assembly of the preferred embodiment toothbrush kits described herein, the assembly techniques are based upon selective matching of certain components of the kit with other components. Preferably, matched combinations of components are selectively further matched with particular packages so that numerous styles of toothbrush kits may be produced from only a few and most preferably from a single assembly line. For example, at least two types or styles of a package for a preferred embodiment toothbrush kit are conveyed to a packing station. The kits may share a common marketing characteristic or theme(s) such as sports. However, the kits are different in that they utilize different marketing characteristics such as language, geography, or distribution aspects. Provided at that packing station are an inventory or source of different various types or styles of label sets. One or more of these label sets are then matched or associated with one of the toothbrush kit packages. These labels preferably reflect the marketing characteristic by which the kits differ. Additional components of the kit may also be incorporated therein. Examples of other components include electric toothbrushes and one or more end caps as described herein. Most preferably, the matching of labels to toothbrush kit packages could be based upon the intended distribution center or warehouse, area, language, geography or region in which the toothbrush kit will be sold or otherwise commercialized.

Another significant feature of the preferred embodiment toothbrush kit is that the kit and/or its components may be used in conjunction with other compatible toothbrushes. It is contemplated that a consumer might use more than one end cap, such as with a second toothbrush. Additionally, after selecting one or more emblems for use with the toothbrush contained in the kit, any remaining emblems could be used in conjunction with a second, third, or more similar toothbrushes. Therefore, although the preferred embodiment kit is generally self-contained and designed for use with the toothbrush contained in that kit, the end cap and emblem components of the kit may be used in conjunction with other toothbrushes similar to the toothbrush supplied in the kit.

It is also contemplated that the toothbrush kit may additionally include two or more toothbrushes for use with the various end caps and emblems. Hence, in this embodiment, the package component would be adapted to retain the plurality of toothbrushes.

## Claims

1. A toothbrush kit (100, 150) comprising a package (500, 510) containing an electric toothbrush (200, 202, 210, 250, 280) having an elongated hollow body (252, 282), a head (214, 258, 288), and a neck disposed there between,
**characterized by** a plurality of decorative end caps (300, 310, 350) disposed within said package, each of which is attachable to said hollow body to thereby customize the appearance of said electric toothbrush, wherein each end cap (300, 310, 350) is distinct from other end caps,
wherein said hollow body (252, 282) of said electric toothbrush (200, 202, 210, 250, 280), further defines an internal compartment adapted for receiving a battery, said body (252, 282) further defining an aperture (257) providing access into said internal compartment, and wherein each end cap (300, 310) is adapted to close the aperture (257).

2. A toothbrush kit (100. 150) of claim 1, wherein each end cap (300, 310, 350) is generally hemispherical in shape and having a flat planar bottom surface (312) provided so that the end cap (300, 310, 350) may serve as a base and support the toothbrush (200, 202, 210, 250, 280) engaged therewith in a generally vertical, upright position.

3. The toothbrush kit of claim 2, wherein each end cap (300, 310, 350) is shaped to resemble a playing ball, such as a football, a baseball, a basketball, a bowling ball, a tennis ball, a golf ball or a soccer ball.

4. The toothbrush kit of claim 1, further comprising a plurality of emblems (400, 452, 482), wherein each emblem is distinct from the other emblems (400, 452, 482) and each can be attached to the hollow body (252, 282) of the toothbrush (200, 202, 210, 250, 280) to thereby customize the appearance of the toothbrush (200, 202, 210, 250, 280).

5. The toothbrush kit (100, 150) of claim 4, wherein each emblem (400, 452, 482) can be adhesively attached to the toothbrush (200, 202, 210, 250, 280).

6. The toothbrush kit (100, 150) of claim 5, wherein the plurality of emblems (400, 452, 482) is provided on a common substrate (454, 484).

7. The toothbrush kit (100, 150) of claim 6, wherein the substrate (454, 484) is provided in the form of a roll (480).

## Patentansprüche

1. Zahnbürstensatz (100, 150), umfassend eine Verpackung (500, 510), die eine elektrische Zahnbürste (200, 202, 210, 250, 280) enthält, die einen länglichen hohlen Körper (252, 282), ein Kopfstück (214, 258, 288) und einen dazwischen angeordneten Hals aufweist,
**gekennzeichnet durch** mehrere in der Verpackung angeordnete dekorative Endkappen (300, 310, 350), von denen jede an dem hohlen Körper angebracht werden kann, um **dadurch** das Erscheinungsbild der elektrischen Zahnbürste individuell anzupassen, wobei sich jede Endkappe (300, 310, 350) von anderen Endkappen unterscheidet,
wobei der hohle Körper (252, 282) der elektrischen Zahnbürste (200, 202, 210, 250, 280) ferner ein Innenfach bestimmt, das für die Aufnahme einer Batterie angepasst ist, wobei der Körper (252, 282) ferner eine Öffnung (257) bestimmt, die den Zugang in das Innenfach ermöglicht, und wobei jede Endkappe (300, 310) so angepasst ist, dass sie die Öffnung (257) verschließt.

2. Zahnbürstensatz (100, 150) nach Anspruch 1, wobei jede Endkappe (300, 310, 350) im Allgemeinen eine halbkugelförmige Form hat und mit einer flachen, ebenen unteren Oberfläche (312) versehen ist, so dass die Endkappe (300, 310, 350) als Basis dienen und die darin eingerastete Zahnbürste (200, 202, 210, 250, 280) in einer im Allgemeinen vertikalen, aufrechten Position stützen kann.

3. Zahnbürstensatz nach Anspruch 2, wobei jede Endkappe (300, 310, 350) so geformt ist, dass sie einem Spielball ähnelt, wie einem Football-Ball, einem Baseball, einem Basketball, einem Bowlingball, einem Tennisball, einem Golfball oder einem Fußball.

4. Zahnbürstensatz nach Anspruch 1, ferner umfassend mehrere Embleme (400, 452, 482), wobei sich jedes Emblem von den anderen Emblemen (400, 452, 482) unterscheidet und jedes an dem hohlen Körper (252, 282) der Zahnbürste (200, 202, 210, 250, 280) angebracht werden kann, um **dadurch** das Erscheinungsbild der Zahnbürste (200, 202, 210, 250, 280) individuell anzupassen.

5. Zahnbürstensatz (100, 150) nach Anspruch 4, wobei jedes Emblem (400, 452, 482) an der Zahnbürste (200, 202, 210, 250, 280) haftend angebracht werden kann.

6. Zahnbürstensatz (100, 150) nach Anspruch 5, wobei die mehreren Embleme (400, 452, 482) auf einem gemeinsamen Trägermaterial (454, 484) bereitgestellt werden.

7. Zahnbürstensatz (100, 150) nach Anspruch 6, wobei das Trägermaterial (454, 484) in Form einer Rolle (480) bereitgestellt wird.

## Revendications

1. Trousse de brosse à dents (100, 150) comprenant un conditionnement (500, 510) contenant une brosse à dents électrique (200, 202, 210, 250, 280) ayant un corps creux allongé (252, 282), une tête (214, 258, 288), et un col disposé entre eux, **caractérisée par** une pluralité de coiffes d'extrémité décoratives (300, 310, 350) disposées au sein dudit conditionnement, dont chacune peut être fixée audit corps creux pour personnaliser de ce fait l'apparence de ladite brosse à dents électrique, dans laquelle chaque coiffe d'extrémité (300, 310, 350) est distincte des autres coiffes d'extrémité,
dans laquelle ledit corps creux (252, 282) de ladite brosse à dents électrique (200, 202, 210, 250, 280), définit en outre un compartiment interne adapté pour recevoir une batterie, ledit corps (252, 282) définissant en outre une ouverture (257) offrant un accès dans ledit compartiment interne, et dans laquelle chaque coiffe d'extrémité (300, 310) est adaptée pour fermer l'ouverture (257).

2. Trousse de brosse à dents (100, 150) selon la revendication 1, dans laquelle chaque coiffe d'extrémité (300, 310, 350) est généralement de forme hémisphérique et ayant une surface inférieure planaire plate (312) fournie de sorte que la coiffe d'extrémité (300, 310, 350) peut servir de base et soutenir la brosse à dents (200, 202, 210, 250, 280) en prise avec elle dans une position dressée, généralement verticale.

3. Trousse de brosse à dents selon la revendication 2, dans laquelle chaque coiffe d'extrémité (300, 310, 350) est profilée pour ressembler à un ballon de jeu, tel qu'un ballon de football américain, une balle de base-ball, un ballon de basketball, une boule de bowling, une balle de tennis, une balle de golf ou un ballon de football.

4. Trousse de brosse à dents selon la revendication 1, comprenant en outre une pluralité d'emblèmes (400, 452, 482), dans laquelle chaque emblème est distinct des autres emblèmes (400, 452, 482) et chacun peut être fixé au corps creux (252, 282) de la brosse à dents (200, 202, 210, 250, 280) pour personnaliser de ce fait l'apparence de la brosse à dents (200, 202, 210, 250, 280).

5. Trousse de brosse à dents (100, 150) selon la revendication 4, dans laquelle chaque emblème (400, 452, 482) peut être fixé de manière adhésive à la brosse à dents (200, 202, 210, 250, 280).

6. Trousse de brosse à dents (100, 150) selon la revendication 5, dans laquelle la pluralité d'emblèmes (400, 452, 482) est fournie sur un substrat commun (454, 484).

7. Trousse de brosse à dents (100, 150) selon la revendication 6, dans laquelle le substrat (454, 484) est fourni sous la forme d'un rouleau (480).
